# EUROPEAN PATENT APPLICATION

(11) **EP 3 993 328 A1**
(43) Date of publication of application: **04.05.2022**
(21) Application number: 19937704.5
(22) Date of filing: 12.10.2019
(51) Int. Cl.: H04L 12/721

(54) **ROUTE DISTRIBUTION METHOD AND CONTROLLER, INFORMATION ROUTING METHOD AND NETWORK NODE DEVICE**

(30) Priority: 18.07.2019 CN 201910650501
(71) Applicant: Xiamen Wangsu Co., Ltd., Xiamen, Fujian 361000 (CN)
(72) Inventor: WANG, Lipeng, Xiamen, Fujian 361000 (CN)
(74) Representative: De Arpe Tejero, Manuel
(86) International application number: PCT/CN2019/110770
(87) International publication number: WO 2021/007963

(57) **Abstract**

The present disclosure discloses a routing distribution method, a controller, an information routing method, and a network node device. The method is applied to the controller, and the controller stores node detection information sent by each network node device and user detection information sent by each client. The method includes: responding to a first access request directed from a first client points to a second client; planning an optimal path between the first client and the second client based on the node detection information and the user detection information, and generating a routing strategy corresponding to the optimal path; and distributing the routing strategy to the network node device and/or the client in the optimal path. According to the technical solution provided by the present disclosure, the optimal path for data transmission can be flexibly adjusted according to actual service requirements of the user, and working efficiency of a network is improved.

## Description

### TECHNICAL FIELD

The present disclosure relates to the field of Internet technology, and more particularly, to a routing distribution method and a controller, an information routing method, and a network node device.

### BACKGROUND

With the growth of enterprise scale and the development of Internet services, large-scale enterprises need to solve the problem of network interconnection between company headquarters, Internet Data Centers (IDC), and branch offices, etc. Traditional enterprise wide area network (WAN) solutions are solved by using Virtual Private Network (VPN) in the Internet or deploying dedicated lines. However, problems such as large Internet network jitter and peak congestion may lead to poor user service interaction. Although deployment of the dedicated lines can provide good link protection, it faces problems such as high costs, inflexible access of the branch offices, and long service activation cycles, etc.

In view of this, it is necessary to provide a new information routing method and network node device, routing distribution method and controller to solve the above-mentioned deficiencies.

### SUMMARY

An objective of the present disclosure is to provide a routing distribution method, a controller, an information routing method, and a network node device, which can simplify deployment of a network and improve operating efficiency of the network.

To achieve the above objective, an aspect of the present disclosure provides a routing distribution method, which is applied to a controller, wherein the controller stores node detection information sent by each network node device and user detection information sent by each client. The method includes: responding to a first access request directed from a first client points to a second client; planning an optimal path between the first client and the second client based on the node detection information and the user detection information, and generating a routing strategy corresponding to the optimal path; and distributing the routing strategy to the network node device and/or the client in the optimal path.

To achieve the above objective, another aspect of the present disclosure also provides a controller, wherein controller stores node detection information sent by each network node device and user detection information sent by each client. The controller includes: an access receiving unit, configured to receive a first access request directed from a first client to a second client; a routing planning unit, configured to plan an optimal path between the first client and the second client based on the node detection information and the user detection information, and generate a routing strategy corresponding to the optimal path; and a routing distribution unit, configured to distribute the routing strategy to the network node device and/or the client in the optimal path.

To achieve the above objective, an aspect of the present disclosure provides an information routing method, which is applied to a network node device. The network node device stores a plurality of routing strategies issued by a controller, and each of the plurality of routing strategies has a customer identifier. The method includes: receiving a data packet sent by an upstream node, recognizing a target customer identifier carried in the data packet, and searching for a target routing strategy having the target customer identifier; extracting a destination address of the data packet, and determining a downstream node directed by the destination address from the target routing strategy; and forwarding the data packet to the downstream node.

To achieve the above objective, another aspect of the present disclosure also provides a network node device, which stores a plurality of routing strategies issued by a controller, wherein each of the plurality of routing strategies has a customer identifier. The network node device includes: a target user recognition unit, configured to receive a data packet sent from an upstream node, recognize target user information carried in the data packet, and search for a target routing strategy having a target customer identifier; a node management unit, configured to extract a destination address of the data packet, and determine a downstream node directed by the destination address from the target routing strategy; and a packet forwarding unit, configured to forward the data packet to the downstream node.

As can be seen, in the technical solutions provided by the present disclosure, by means of the node detection information reported by a network node device, the controller calculates an optimal path for data packet transmission based on a path decision algorithm, and generates a corresponding routing strategy. Next, the controller distributes the routing strategy to each network node device on the optimal path. The network node device only needs to forward a data packet according to the routing strategy received, and does not need to care about its own routing table and other traditional table entries, such that separation of an entire network control plane from a data plane is implemented, and deployment of the network is simplified. Furthermore, based on adjustment of the path decision algorithm, the technical solutions provided by the present disclosure can also flexibly adjust the optimal path for data transmission according to a user's actual service requirements, and improve operating efficiency of the network.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of an SDN network architecture according to an embodiment of the present disclosure;
FIG. 2 is a flowchart of a routing distribution method according to an embodiment of the present disclosure;
FIG. 3 is a schematic diagram of a network topology according to an embodiment of the present disclosure;
FIG. 4 is a schematic diagram of functional modules of a controller according to an embodiment of the present disclosure;
FIG. 5 is a schematic structural diagram of a controller according to an embodiment of the present disclosure; and
FIG. 6 is a flowchart of an information routing method according to an embodiment of the present disclosure.

### DETAILED DESCRIPTION

To make the objectives, technical solutions and advantages of the present disclosure clearer, the embodiments of the present disclosure will be further described below in detail with reference to the accompanying drawings.

For ease of understanding of contents of separation of a control plane from a data plane referred to in the present disclosure, a brief introduction thereof is made below. A traditional network is a distributed control architecture. Each node device (router, switch, etc.) in the network includes a separate control plane and a data plane, wherein the control plane configured for protocol calculation and the data plane configured for packet forwarding are positioned on the same node device. When routing calculation and network topology are changed, each node device has to perform a routing calculation again, which causes failure of the traditional network in flexibly adjusting a data transmission path. Furthermore, network protocols of each node device are complex and are different in implementation mechanisms, resulting in complicated operation and maintenance when deploying and updating network services. As a reconstruction of the traditional network architecture, Software Defined Network (SDN) is a centralized control network architecture reconstructed from the original distributed control network architecture. A control plane on the node device is separated by the SDN and is in the management of a centralized controller without relying on underlying node devices, thereby shielding differences from the underlying node devices. However, control rights are completely open, and thus users may self-define any desired network routing and transmission rules and strategies.

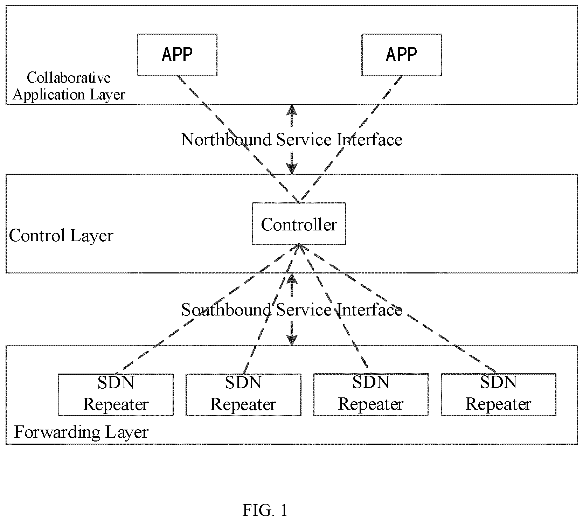

Referring to FIG. 1, a schematic diagram of an SDN network architecture is illustrated.

The SDN network architecture is divided into three layers: a collaborative application layer, a control layer, and a forwarding layer. The collaborative application layer is mainly configured to manage and run various application programs developed by users. As a control center of the entire system, the control layer interacts with the forwarding layer by means of the southbound control interface and interacts with the collaborative application layer by means of a northbound service interface, wherein a principle part for implementation of the control layer is a controller. The controller takes charge of generation of internal switching paths and boundary service routing of the network, and takes charge of processing network status changes. When network status changes such as link failure, node failure and network congestion occurs, the controller may adjust the network switching paths and the service routing according to information of these network status changes, such that the network is always in a normal operating state. As a basic forwarding network constituted by various network node devices in the traditional network, in one aspect the forwarding layer reports network resource information and status to the control layer, and in another aspect the forwarding layer receives a routing strategy issued by the control layer, wherein a principle part for implementation of the forwarding layer is an SDN repeater (i.e., various network node devices supporting SDN). The SDN repeater takes charge of forwarding data packets, and forwarding table entries required for the forwarding process are generated by the control layer. The SDN repeater serves as an execution unit of the system and does not make decisions itself.

As can be seen, the SDN may implement programmable control of the network node device by means of a software platform in the controller to implement on-demand allocation of network resources. However, the SDN repeater merely takes charge of forwarding the data packets. The controller has functions of link discovery and topology management, wherein the link discovery and the topology management mainly refer to unified monitoring and statistics, performed by the controller by means of an uplink channel of the southbound control interface, on information reported by the underlying network node device.

It is to be particularly pointed out that the controller mentioned below has created and stored a complete network topology diagram, and each client and each network node device mentioned below exist in the above network topology diagram. Each client, each network node device and the controller may be communicated to each other.

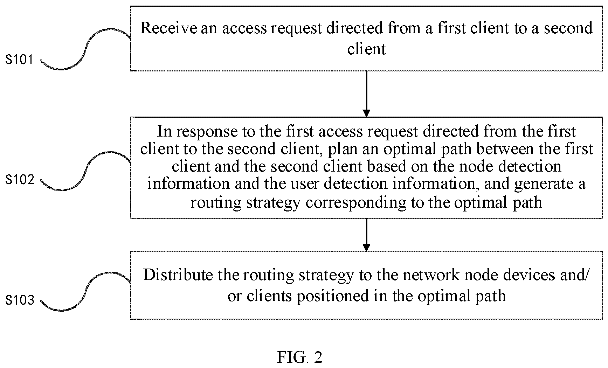

Referring to FIG. 2, the routing distribution method provided by the present disclosure is applied to a controller, wherein the controller stores node detection information sent by each network node device and user detection information sent by each client.

In this embodiment, any network node device in the network may send a detection request packet to other network node devices connected thereto, and obtain node detection information between this network node device and the other network node devices according to detection response packets returned by the other network node devices.

After the node detection information is obtained, the network node device may send the node detection information to the controller by means of the uplink channel of the southbound control interface, such that the controller stores the node detection information. It is to be particularly pointed out that the network node device may actively send a detection request packet regularly according to a preset time value, or may passively send a detection request packet according to a detection information update instruction issued by the controller when a network topology structure changes, and the present disclosure is not limited thereto.

In this embodiment, any client in the network may also send a detection request packet to a network node device connected thereto, and obtain user detection information between this client and the network node device according to the detection response packet returned by the network node device.

After obtaining the user detection information, the client may send the user detection information to the controller by means of the uplink channel of the southbound control interface, such that the controller stores the user detection information. It is to be particularly pointed out that the client may actively send a detection request packet regularly according to a preset time value, or may passively send the detection request packet according to a detection information update instruction issued by the controller when a network topology structure changes, and the present disclosure is not limited thereto.

In practical applications, a certain client in the network may be connected to a plurality of network node devices simultaneously. The plurality of network node devices may be in the same local area network as the client, or may be in a local area network different from that of the client. In this case, the client may only send the detection request packets to the network node devices in the same local area network as the client, to reduce number of detection request packets sent by the client in the network, thereby reducing network load. It is to be particularly pointed out that the client may also only send the detection request packet to a network node device that is close to a geographic location of the client and in the same operator network as the client, which is not limited in the present disclosure.

It is to be particularly pointed out that the node detection information and the user detection information at least include network quality information such as network delay, network jitter, and network packet loss rate. In practical applications, with the continuous enrichment of technical means and the change of application scenarios, the node detection information and the user detection information may contain more or less contents, which is not limited in the present disclosure.

It is to be particularly pointed out that all network node devices in the network will send the detection request packets and the node detection information, and all clients in the network will send the detection request packets and the user detection information, such that the controller may store the node detection information sent by all the network node devices and the user detection information sent by all the clients. According to the stored network topology diagram, the controller may obtain network quality information of all the node devices in the network topology diagram.

It is to be particularly pointed out that when the routing distribution method in the present disclosure is applied to an enterprise wide area network (WAN), each client also has a customer identifier bound to an enterprise WAN identifier, wherein the customer identifier may be configured to indicate whether a certain client and other clients are in the same enterprise WAN. Correspondingly, when a certain client sends the user detection information to the controller, this client also needs to send its customer identifier to the controller.

The routing distribution method provided in the present disclosure may include following steps.

S101: receiving an access request directed from a first client to a second client.

In this embodiment, the first client needs to access the second client. At this moment, an access request sent by the first client and taking the second client as a destination address first arrives at the controller. Apparently, the access request carries an address of the first client and an address of the second client, such that the controller determines a source address and a destination address of the access request according to the address of the first client and the address of the second client.

In one embodiment, when the first client and the second client are positioned in the same enterprise WAN, the first client and the second client also have the same customer identifier, and the access request also carries the above-mentioned customer identifier, and the first client and the second client having the same customer identifier may be positioned in the same enterprise WAN.

In practical applications, when the controller receives an access request directed from the first client to the second client, the controller may first determine whether a corresponding routing strategy exists currently. When no corresponding routing strategy exists currently, this indicates that the access request is received by the controller for the first time. In this case, this access request may be responded to according to the following routing strategy. However, when the corresponding routing strategy exists currently, this indicates that the access request is not received by the controller for the first time. In this case, the access request may be forwarded according to the existing routing strategy. Meanwhile, number of requests for the access requests may be recorded to determine a hotspot access request by statistics, and the corresponding routing strategy may be updated in real time for the hotspot access request.

S102: in response to the first access request directed from the first client to the second client, planning an optimal path between the first client and the second client based on the node detection information and the user detection information, and generating a routing strategy corresponding to the optimal path.

In this embodiment, the controller may calculate the optimal path between the first client and the second client according to the node detection information and the user detection information stored by means of a shortest path algorithm. The optimal path includes all network node devices through which a data packet is sent from the first client to the second client and upstream and downstream connection relationships between the network node devices. The controller generates a corresponding routing strategy according to the above optimal path, wherein the above routing strategy at least includes user information and node information. The node information at least includes address information of all the network node devices through which the data packet is sent from the first client to the second client. The user information at least includes a customer identifier of the first client and a customer identifier of the second client, and address information configured for characterizing an initiating terminal and a destination terminal of the optimal path.

It is to be particularly pointed out that when the first client sends a data packet directed to the second client, the data packet may finally reach the second client according to the above routing strategy.

S103: distributing the routing strategy to the network node devices and/or clients positioned in the optimal path.

After generating the routing strategy corresponding to the optimal path, the controller may send the routing strategy to all the network node devices and/or clients in the optimal path by means of a downstream channel of the southbound control interface.

In one embodiment, after the controller generates the routing strategy corresponding to the optimal path, the controller may uniformly distribute the complete routing strategy to all the network node devices and/or clients in the optimal path to reduce calculation load of the controller. For a certain network node device or client in the optimal path, the routing strategy received not only includes routing instructions that need to be executed by the network node device or the client, but also includes routing instructions that need to be executed by other network node devices and clients in the optimal path.

In another embodiment, after the controller generates the routing strategy corresponding to the optimal path, the controller may also divide the routing strategy into routing sub-strategies according to the identifier of the network node device and the identifier of the client in the optimal path, and distribute the routing sub-strategies to the corresponding network node device or client according to the identifier of the network node device and the identifier of the client. The routing sub-strategies only include the routing instructions that need to be executed by the network node device or the client, to reduce the network load when the controller issues the routing strategy, and improve efficiency of forwarding the data packets by the network node device or the client. It is to be particularly pointed out that the identifier of the network node device and the identifier of the client may be determined based on a media access control (MAC) address of a device, or may be determined by the controller according to a unique number assigned to the device by the network topology diagram, which is not limited in the present disclosure.

In one embodiment, a complete network topology diagram is stored in the controller, so the controller may obtain all connection paths (i.e., a set of candidate paths) between the first client and the second client according to the network topology diagram. The connection paths include all the network node devices through which the data packet is sent from the first client to the second client.

For a certain candidate path, the controller may recognize node detection information between two network node devices directly connected to each other from the stored node detection information according to all the network node devices included in this candidate path and upstream and downstream connection relationship between the network node devices, and the controller may recognize, from the stored user detection information, user detection information between the first client and the network node device directly connected to the first client and user detection information between the second client and the network node device directly connected to the second client. Further, based on the node detection information and the user detection information, the controller may calculate a path index value corresponding to this candidate path. By performing the same operation on all the candidate paths in the set of candidate paths, the controller may calculate path index values corresponding to all the candidate paths in the set of candidate paths, and may determine the optimal path based on these path index values.

When calculating a path index value corresponding to a certain candidate path, the controller may obtain a network quality parameter corresponding to this candidate path based on the node detection information and the user detection information, and calculate the path index value of this candidate path according to the network quality parameter and a weight parameter bound to the customer identifier, wherein the weight parameter may be preset in the controller. In practical applications, because different users may have different service requirements, different weight parameters may be set for different users, and the weight parameters are bound to the customer identifiers to distinguish the weight parameters of the different users.

It is to be particularly pointed out that the network quality parameter at least includes a time delay parameter and/or a jitter parameter and/or a packet loss rate, and the weight parameter at least includes a time delay weight and/or a jitter weight and/or a packet loss rate weight. The weight parameter may be set according to the user's service types.

In practical applications, one enterprise WAN may have a plurality of branch LANs, and terminal devices in each of the plurality of branch LANs do not have public IP addresses, but have different internal network segments, such that terminal devices in one branch LAN may access terminal devices in another branch LAN. In this case, the client may be customer premises equipment (CPE), which is configured to connect the LANs and external networks. It is to be particularly pointed out that at this moment a dedicated network may be established between the client and the network node device directly connected thereto. The dedicated network may be configured to implement information interaction between the client and the network node device by means of a virtual private network (VPN) based on a public network link. The above-mentioned dedicated network may also be configured to establish a dedicated line connection between the client and the network node device by means of a Layer2 dedicated line technology, to implement the information exchange between the client and the network node device, which is not limited in the present disclosure.

In one embodiment, when the client receives a data packet sent from an originating terminal device in a certain LAN and directed to a target terminal device in another LAN , the client may send an internal network segment of the originating terminal device and an internal network segment of the target terminal device to the controller, such that the controller may plan a routing path according to the internal network segment of the originating terminal device and the internal network segment of the target terminal device, to ensure that the above-mentioned data packet can be correctly forwarded to the target terminal device.

An implementation of the routing distribution method provided in the present disclosure is illustrated below.

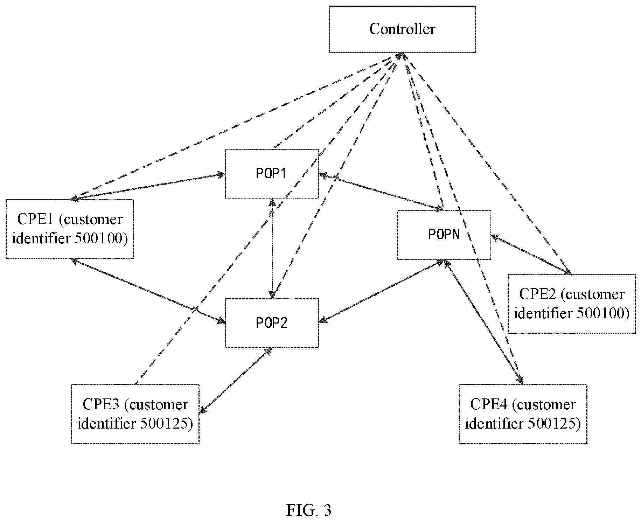

Referring to FIG. 3, assuming that Client 1 (denoted as CPE1) and Client 2 (denoted as CPE2) are positioned in the same enterprise WAN, and Client 3 (denoted as CPE3) and Client 4 (denoted as CPE4) are positioned in another enterprise WAN, wherein the CPE1 and the CPE2 have the same customer identifier 500100, and the CPE3 and the CPE4 have the same customer identifier 500125. A network node device 1 (denoted as POP1), a network node device 2 (denoted as POP2) and the CPE1 are positioned in the same LAN, and a network node device N (denoted as POPN) and the CPE2 are positioned in the same LAN, and the CPE1, the CPE2, the CPE3, the CPE4, the POP1, the POP2 and the POPN are all in the network topology diagram of the controller. The controller may determine that the candidate paths between the CPE1 and the CPE2 are CPE1-POP1-POPN-CPE2 and CPE1-POP2-POPN-CPE2 according to the network topology diagram and the customer identifier 500100.

The controller stores the node detection information sent by each network node device and the user detection information sent by each client. Therefore, the controller certainly stores the node detection information between the POP1 and the POP2 (including time delay parameter D1, jitter parameter S1 and packet loss rate L1 between the POP1 and the POP2), the node detection information between the POP1 and the POPN (including time delay parameter D2, jitter parameter S2 and packet loss rate L2 between the POP1 and the POPN), the node detection information between the POP2 and the POPN (including time delay parameter D3, jitter parameter S3 and packet loss rate L3 between the POP2 and the POPN), the user detection information between the CPE1 and the POP1 (including time delay parameter D4, jitter parameter S4 and packet loss rate L4 between the CPE1 and the POP1), the user detection information between the CPE1 and the POP2 (including time delay parameter D5, jitter parameter S5 and packet loss rate L5 between the CPE1 and the POP2), and the user detection information between the CPE2 and the POPN (including time delay parameter D6, jitter parameter S6 and packet loss rate L6 between the CPE2 and the POPN).

The controller calculates a path index value of each candidate path according to the preset weight parameters (assuming a time delay weight is α, a jitter weight is β, and a packet loss rate weight is γ) bound to the customer identifier 500100 by means of the path decision algorithm.

The path index value of the Path CPE1-POP1-POPN-CPE2 is as below:
In1=α^{∗}(D4+D2+D6)+β^{∗}(S4+S2+S6)+γ^{∗}(L4+L2+L6)^{∗}100; and
the path index value of the Path CPE1-POP2-POPN-CPE2 is as below:
ln2=α^{∗}(D5+D3+D6)+β^{∗}(S5+S3+S6)+γ^{∗}(L5+L3+L6)^{∗}100.

When In1 is less than In2, this means that the Path CPE1-POP1-POPN-CPE2 is superior to the Path CPE1-POP2-POPN-CPE2, and the controller will select the Path CPE1-POP1-POPN-CPE2 as the optimal path and generate a routing strategy corresponding to the Path CPE1-POP1-POPN-CPE2, and distribute the generated routing strategy to the CPE1, the POP1, the POPN, and the CPE2. The routing strategy comprises routing instructions to be executed by the CPE1, the POP1, the POPN, and the CPE2.

It is to be particularly pointed out that the controller may uniformly distribute the complete routing strategy to the CPE1, the POP1, the POPN, and the CPE2. The controller may also divide the above routing strategy into routing sub-strategies based on respective MAC addresses of the CPE1, the POP1, the POPN and the CPE2, and send the routing sub-strategies to the CPE1, the POP1, the POPN and the CPE2 respectively according to the MAC addresses. The routing sub-strategies only include routing instructions that need to be executed by the network node device or the client.

Now the POP1 in the Path CPE1-POP1-POPN-CPE2 is taken as an example to describe how the controller divides the routing strategy and distributes the routing sub-strategies. Because data packets in the network may flow bidirectionally, the routing sub-strategies received by the POP1 include routing instructions in two directions. The controller may search for the routing instructions to be executed by the POP1 from the above routing strategy. The routing instructions to be executed by the POP1 include (destination address CPE1, next-hop node CPE1); (destination address CPE2, next-hop node POPN). Next, the controller only needs to send the routing instructions to the POP1, such that the routing instructions received by the POP1 only include the routing instructions that need to be executed by the POP1. It is to be particularly pointed out that the time delay weight α, the jitter weight β, and the packet loss rate weight γ may be set according to the actual service needs of users. For example, if a user whose customer identifier is 500100 has a delay-sensitive service, when a weight parameter is set, the value of the time delay weight α may be added accordingly. If a user whose customer identifier is 500125 has a jitter-sensitive service, when the weight parameter is set, the value of the jitter weight β may be added accordingly.

It is to be particularly pointed out that the path decision algorithm enumerated above is only an example, and no limitation should be imposed on path decision algorithms. Based on the idea of the present disclosure, those skilled in the art may also employ other path decision algorithms.

In practical applications, a plurality of network isolation spaces may be created on the same network node device by means of a network isolation technology. Resource isolation may be formed between the plurality of network isolation spaces, and the plurality of network isolation spaces may be rented by different enterprise users, wherein the plurality of network isolation spaces may be bound to the customer identifiers. In this way, the same network node device may provide data forwarding services to a plurality of enterprise users at the same time, and distinguish different enterprise users in the same network node device by means of the customer identifiers, which can ensure that routing strategies of the different enterprise users do not affect each other, and improve a utilization rate of the system. Correspondingly, the node detection information obtained by the network node device may also be reused by the different enterprise users, such that number of detection request packets sent by the network node device in the network is reduced, and thus network load is lightened.

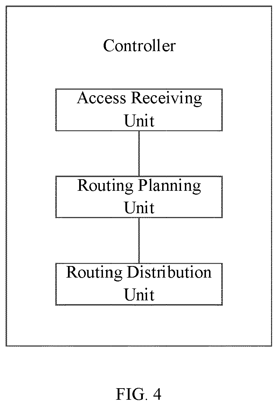

Referring to FIG. 4, the present disclosure also provides a controller storing node detection information sent by each network node device and user detection information sent by each client, and the controller includes:
an access receiving unit, configured to receive an access request directed from a first client to a second client, determine whether the access request is a first access request, and send the first access request to a routing planning unit;
the routing planning unit, configured to plan an optimal path between the first client and the second client based on the node detection information and the user detection information, and generate a routing strategy corresponding to the optimal path to respond to the first access request received; and
a routing distribution unit, configured to distribute the routing strategy to the network node device and/or the client in the optimal path.

In one embodiment, the routing planning unit also includes:
a sub-routing planning module, configured to divide the routing strategy into routing sub-strategies according to an identifier of the network node device and an identifier of the client in the optimal path, and distribute the routing sub-strategies to the corresponding network node device or client.

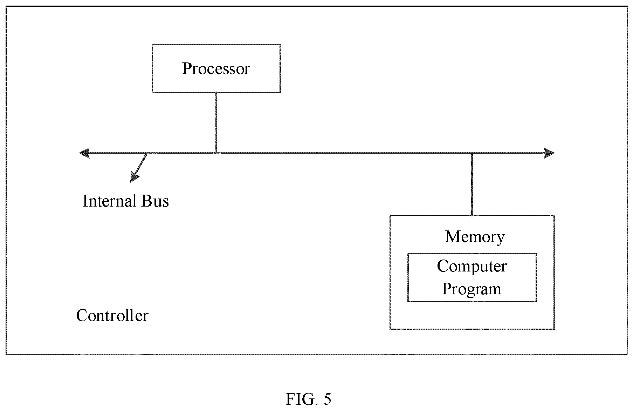

Referring to FIG. 5, the present disclosure also provides a controller, which includes a memory and a processor, wherein the memory is configured to store a computer program. When the computer program is executed by the processor, the routing distribution method described above may be implemented. Specifically, at a hardware level, the subject distribution device may include a processor, an internal bus, and a memory. The memory may include a random access memory and a non-volatile memory. The processor reads the corresponding computer program from the non-volatile memory into the random access memory and then runs. A person of ordinary skill in the art may understand that the structure as shown in FIG. 5 is merely exemplary, and does not limit the structures of the foregoing recognition devices. For example, the subject distribution device may also include more or less components than as shown in FIG. 5, for example, other processing hardware such as a graphics processing unit (GPU) or an external communication port, etc. Of course, the present disclosure does not exclude other implementation manners other than the software implementation manner, such as a logic device or a combination of hardware and software, and so on.

In this embodiment, the processor may include a central processing unit (CPU) or a graphics processing unit (GPU), or of course may also include other single-chip microcomputers, logic gate circuits, integrated circuits and so on with logic processing capabilities, or appropriate combinations thereof. The memory set forth in this embodiment may be a memory device configured to store information. In a digital system, a device that can store binary data may be a memory. In an integrated circuit, a circuit with storage function that has no physical form may also be a memory, such as RAM, FIFO, etc. In a system, a storage device having a physical form may also be referred to as a memory and so on. When implemented, the memory may also be implemented in the form of cloud storage, and a specific implementation manner is not limited in this specification.

It is to be noted that reference may be made to the description of the method embodiments for the specific embodiments of the controller in this specification, and thus repeated description is omitted herein.

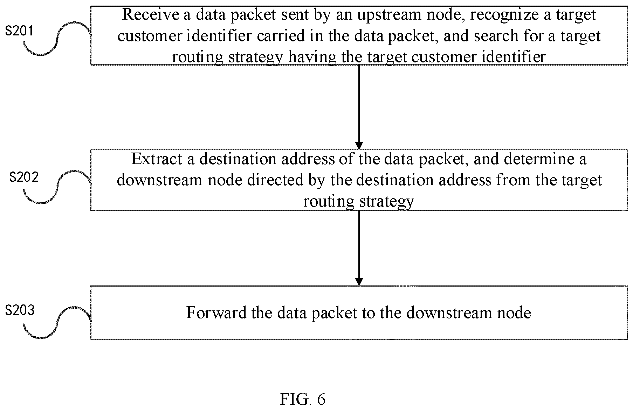

Referring to FIG. 6, the present disclosure also provides an information routing method, which is applied to a network node device. The network node device stores a plurality of routing strategies issued by the controller, and each of the plurality of routing strategies has a customer identifier.

In this embodiment, the network node device may simultaneously serve a plurality of enterprise wide area networks (WANs). Therefore, the above network node device stores a plurality of routing strategies issued by the controller, and the plurality of routing strategies have different customer identifiers. The above-mentioned customer identifiers are bound to the enterprise WANs and the clients in the enterprise WANs, and may be configured to determine the routing strategy to be executed by a client with different customer identifiers. The above-mentioned customer identifier may also be configured to indicate whether a source client and a destination client of a data packet are in the same enterprise WAN.

It should be particularly pointed out that the above routing strategy is generated by the controller according to the optimal path between the source client and the destination client of the data packet, and the above routing strategy may be a complete routing strategy, or may be a routing sub-strategy generated by the controller according to an identifier of the network node device.

Specifically, the method may include following steps.

S201: receiving a data packet sent by an upstream node, recognizing a target customer identifier carried in the data packet, and searching for a target routing strategy having the target customer identifier.

In this embodiment, the network node device receives the data packet forwarded by the upstream node, wherein the above data packet carries the target customer identifier. Specifically, the above target customer identifier may be a customer identifier of the source client of the data packet. The network node device recognizes the above-mentioned target customer identifier, and searches out the target routing strategy having the above-mentioned target customer identifier from the plurality of routing strategies according to the above-mentioned target customer identifier. The above-mentioned target routing strategy includes a downstream node corresponding to a next-hop address, and may be configured to forward the data packet carrying the above-mentioned target customer identifier to the downstream node.

S202: extracting a destination address of the data packet, and determining a downstream node directed by the destination address from the target routing strategy.

In this embodiment, the above-mentioned data packet also carries a destination address. Specifically, the destination address may be an address of the destination client of the data packet, and the network node device may extract the destination address from the data packet, and determine a next-hop address and the downstream node corresponding to the next-hop address according to the direction of the destination address.

Now based on the above CPE1-POP1-POPN-CPE2 path, it is illustrated how the network node device determines the next-hop address and the downstream node corresponding to the next-hop address according to the direction of the destination address. Because a data packet in the network may flow bidirectionally, when forwarding the data packet, the network node device first needs to determine a flow direction of the data packet received, wherein the flow direction of the above data packet may be determined based on the destination address carried in the data packet. For example, when POP1 receives a data packet sent from CPE1, the destination address carried in the data packet is the address of CPE2, and thus POP1 may determine the flow direction of the data packet as a direction directing to CPE2. Further, POP1 determines that the next-hop address is the address of POPN according to the stored routing strategy, and that the corresponding downstream node is POPN. S203: forwarding the data packet to the downstream node.

In this embodiment, the network node device will forward, according to the next-hop address, the above-mentioned data packet to the downstream node corresponding to the next-hop address.

In one embodiment, a plurality of network isolation spaces may also be created in the network node device by means of a network isolation technology, wherein the plurality of network isolation spaces may be bound to the customer identifiers. For example, a plurality of network isolation spaces may be created in the network node device by means of a namespace technology, and the present disclosure does not limit technologies for achieving network isolation. After the plurality of network isolation spaces are bound to the customer identifiers, the network node device may send, according to different customer identifiers of the routing strategy, the routing strategy to the network isolation space bound to the same customer identifier. By dividing a plurality of network isolation spaces in a network node device, the network node device may be reused by clients (i.e., different enterprise users) having different customer identifiers, such that utilization rate of the system is improved. Correspondingly, the node detection information obtained by the network node device may also be reused by different enterprise users, such that number of detection request packets sent by the network node device in the network is reduced, and thus network load is reduced.

In one embodiment, the above network node device may also send a detection request packet to other network node devices connected thereto, and obtain node detection information between this network node device and the other network node devices according to detection response packets returned by the other network node devices. After the node detection information is obtained, the network node device may send the node detection information to the controller by means of an uplink channel of a southbound control interface, such that the controller stores the node detection information. It is to be particularly pointed out that the network node device may actively send a detection request packet regularly according to a preset time value, or may passively send a detection request packet according to a detection information update instruction issued by the controller when a network topology structure changes, and the present disclosure is not limited thereto.

It is to be particularly pointed out that when a client directly connected to a network node device is customer premises equipment (CPE), a dedicated network may also be established between the network node device and the client. The above-mentioned dedicated network may be configured to implement information interaction between the client and the network node device by means of a virtual private network (VPN) based on a public network link. The above-mentioned dedicated network may also be configured to establish a dedicated line connection between the client and the network node device by means of a Layer2 dedicated line technology, to implement the information exchange between the client and the network node device, which is not limited in the present disclosure.

The present disclosure also provides a network node device, which stores a plurality of routing strategies issued by a controller, wherein each of the plurality of routing strategies has a customer identifier, and the network node device includes:
a target user recognition unit, configured to receive a data packet sent from an upstream node, recognize target user information carried in the data packet, and search for a target routing strategy having a target customer identifier;
a node management unit, configured to extract a destination address of the data packet, and determine a downstream node directed by the destination address from the target routing strategy; and
a packet forwarding unit, configured to forward the data packet to the downstream node.

In one embodiment, the above-mentioned network node device also includes:
a detection information reporting unit, configured to obtain node detection information between the network node device and other network node devices, and send the node detection information to the controller; and
an isolation space dividing unit, configured to create a plurality of network isolation spaces in the network node device, each of the plurality of network isolation spaces being bound to the customer identifier; wherein the routing strategy stored in the network node device is sent to some of the plurality of network isolation spaces bound to the customer identifier.

The present disclosure also provides a network node device, which includes a memory and a processor, wherein the memory is configured to store a computer program. When the computer program is executed by the processor, the information routing method described above may be implemented.

It is to be noted that reference may be made to the description of the method embodiments for the specific implementation manner of the network node device in this specification, and thus repeated description is omitted herein.

As can be seen, in the technical solutions provided by the present disclosure, by means of the node detection information reported by a network node device, the controller calculates an optimal path for data packet transmission based on a path decision algorithm, and generates a corresponding routing strategy. Next, the controller distributes the routing strategy to each network node device on the optimal path. The network node device only needs to forward a data packet according to the routing strategy received, and does not need to care about its own routing table and other traditional table entries, such that separation of an entire network control plane from a data plane is implemented, and deployment of the network is simplified. Furthermore, based on adjustment of the path decision algorithm, the technical solutions provided by the present disclosure can also flexibly adjust the optimal path for data transmission according to a user's actual service requirements, and improve operating efficiency of the network. The technical solutions provided by the present disclosure can also implement reuse of the network node device by means of network isolation technologies, improve the utilization rate of the system, and allow the node detection information obtained by the network node device to be reused by different enterprise users, such that number of detection request packets sent by the network node device in the network is reduced, and thus network load is reduced.

From the description of the foregoing embodiments, those skilled in the art may clearly know that various embodiments may be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions so that it is possible to execute embodiments or methods as recited in some parts of embodiments by a computer equipment (personal computers or servers, or network equipment, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

## Claims

1. A routing distribution method, the method is applied to a controller, and the controller stores node detection information sent by each network node device and user detection information sent by each client, wherein the method comprising:
responding to a first access request directed from a first client to a second client;
planning an optimal path between the first client and the second client based on the node detection information and the user detection information, and generating a routing strategy corresponding to the optimal path; and
distributing the routing strategy to the network node device and/or the client in the optimal path.

2. The method according to claim 1, wherein after generating the routing strategy corresponding to the optimal path, the method further comprising:
dividing the routing strategy into routing sub-strategies according to an identifier of the network node device and an identifier of the client in the optimal path, and distributing the routing sub-strategies to the corresponding network node device or client.

3. The method according to claim 1, wherein the planning an optimal path between the first client and the second client comprising:
obtaining a set of candidate paths between the first client and the second client;
calculating a path index value of a candidate path in the set of candidate paths according to the node detection information and the user detection information; and
determining the optimal path based on the path index value.

4. The method according to claim 3, wherein the calculating a path index value of a candidate path in the set of candidate paths comprising:
obtaining a network quality parameter corresponding to the candidate path based on the node detection information and the user detection information; and
calculating the path index value of the candidate path according to the network quality parameter and a weight parameter bound to the identifier of the client.

5. The method according to claim 4, wherein the network quality parameter at least comprising a time delay parameter and/or a jitter parameter and/or a packet loss rate, and the weight parameter at least comprising a time delay weight and/or a jitter weight and/or a packet loss rate weight.

6. A controller, the controller stores node detection information sent by each network node device and user detection information sent by each client, wherein the controller comprising:
an access receiving unit, configured to receive a first access request directed from a first client to a second client;
a routing planning unit, configured to plan an optimal path between the first client and the second client based on the node detection information and the user detection information, and generate a routing strategy corresponding to the optimal path; and
a routing distribution unit, configured to distribute the routing strategy to the network node device and/or the client in the optimal path.

7. The controller according to claim 6, wherein the routing planning unit further comprising:
a sub-routing planning module, configured to divide the routing strategy into routing sub-strategies according to an identifier of the network node device and an identifier of the client in the optimal path, and distribute the routing sub-strategies to the corresponding network node device or client.

8. A controller, the controller comprising a memory and a processor, wherein the memory is configured to store a computer program, and when the computer program is executed by the processor, the method according to any one of claims 1 to 5 is implemented.

9. An information routing method, the method is applied to a network node device, the network node device stores a plurality of routing strategies issued by a controller, and each of the plurality of routing strategies has a customer identifier, wherein the method comprising:
receiving a data packet sent by an upstream node, recognizing a target customer identifier carried in the data packet, and searching for a target routing strategy having the target customer identifier;
extracting a destination address of the data packet, and determining a downstream node directed by the destination address from the target routing strategy; and
forwarding the data packet to the downstream node.

10. The method according to claim 8, wherein a plurality of network isolation spaces are created in the network node device, each of the plurality of network isolation spaces is bound to the customer identifier, and the routing strategy stored in the network node device is sent to some of the plurality of network isolation spaces bound to the customer identifier.

11. The method according to claim 8, further comprising:
obtaining node detection information between the network node device and other network node devices; and
sending the node detection information to the controller.

12. A network node device, wherein the network node device stores a plurality of routing strategies issued by a controller, and each of the plurality of routing strategies has a customer identifier, the network node device comprising:
a target user recognition unit, configured to receive a data packet sent from an upstream node, recognize target user information carried in the data packet, and search for a target routing strategy having a target customer identifier;
a node management unit, configured to extract a destination address of the data packet, and determine a downstream node directed by the destination address from the target routing strategy; and
a packet forwarding unit, configured to forward the data packet to the downstream node.

13. The network node device according to claim 12, further comprising:
a detection information reporting unit, configured to obtain node detection information between the network node device and other network node devices, and send the node detection information to the controller; and
an isolation space dividing unit, configured to create a plurality of network isolation spaces in the network node device, each of the plurality of network isolation spaces being bound to the customer identifier; wherein the routing strategy stored in the network node device is sent to some of the plurality of network isolation spaces bound to the customer identifier.

14. A network node device, comprising a memory and a processor, wherein the memory is configured to store a computer program, and when the computer program is executed by the processor, the method according to any one of claims 9 to 11 is implemented.
